# EUROPÄISCHE PATENTSCHRIFT

(11) **EP 1 971 161 B1**
(45) Veröffentlichungstag und Bekanntmachung des Hinweises auf die Patenterteilung: **01.05.2019**
(21) Anmeldenummer: 08101178.5
(22) Anmeldetag: 31.01.2008
(51) Int. Cl.: H04W 12/06, H04L 29/06, H04W 8/22

(54) **Verfahren zum sicheren Austausch von Daten**
Secure data exchange method
Procédé destiné à l'échange de données

(30) Priorität: 02.02.2007 DE 102007006116
(43) Veröffentlichungstag der Anmeldung: 17.09.2008
(73) Patentinhaber: Vodafone Holding GmbH, 40213 Düsseldorf (DE)
(72) Erfinder: Jungblut, Stephan, Düsseldorf 40477 (DE)
(74) Vertreter: Weisbrodt, Bernd

(56) Entgegenhaltungen:
- WO-A-01/80525
- WO-A-03/063411
- DE-A1- 10 102 779
- DE-A1-102005 062 307
- DO VAN THANH ET AL: "Offering SIM Strong Authentication to Internet Services" INTERNET CITATION, [Online] 1. Oktober 2006 (2006-10-01), XP002427454 Gefunden im Internet: URL:http://www.strongsim.org/docs/MKT_SIM_ StrongAuthWhitePaper.pdf> [gefunden am 2007-03-30]

## Beschreibung

### Technisches Gebiet

Die Erfindung betrifft ein Verfahren zum sicheren Austauschen von Daten, welche in einer Datenverarbeitungsanlage gespeichert sind, wobei der sichere Austausch der Daten mit einem Mobilfunkendgerät erfolgt, welches sich mit Hilfe einer SIM-Karte in einem Mobilfunknetz identifiziert und authentifiziert, *mit folgenden Verfahrensschritten:*
*a) Registrieren eines Benutzers durch eine Sprachverbindung in der Datenverarbeitungsanlage,*
*b) Übermitteln eines Passwortes und*/*oder eines Benutzernamens an den Benutzer,*
*c) Generieren eines Aktivierungscodes durch einen auf der SIM-Karte des Mobilfunkendgeräts vorgesehenen Aktivierungscodegenerator.*

### Stand der Technik

Mit der Weiterentwicklung von Mobilfunkendgeräten und Mobilfunknetzen werden einem Benutzer immer mehr Dienste angeboten, dabei denen eine Benutzeridentifizierung durch sichere Authentifizierungsverfahren und eine Prüfung von Zugangsberechtigungen durch geeignete Autorisierungsmechanismen gewährleistet werden muss. Üblicherweise wird zur Authentifizierung und Autorisierung bei einem Dienst ein gemeinsames Geheimnis, wie beispielsweise ein oder mehrere Passwörter oder Pins verwendet. Dabei besteht sowohl beim Benutzer als auch bei einem Dienstanbieter der Wunsch, ein gemeinsames Geheimnis bei Bedarf möglichst umgehend und sicher zu implementieren. Ein zeitaufwendiges und sehr umständliches persönliches Überreichen oder eine sehr langsame postalische Zusendung des gemeinsamen Geheimnisses soll vermieden werden.

Auch bei Firmen besteht der Bedarf, dass externe Geräte, beispielsweise von Außenmitarbeitern, auf Daten einer Datenverarbeitungsanlage der Firma zugreifen können - sei es zum Zugriff oder zum Austausch. Die Firmen vergeben dazu beispielsweise Passwörter, die es diesen Mitarbeitern ermöglicht auf die Daten zuzugreifen. Der Mitarbeiter muss sich die Passwörter merken. Bei Kontaktaufnahme mit der Datenverarbeitungsanlage der Firma kommt dieses Passwort zum Einsatz. Mit dem Passwort identifiziert und authentifiziert sich ein Teilnehmer für den Zugriff auf die Daten.

Zur Authentifizierung oder Codierung werden u. a. Einmalpassworte oder Einmalcodes benutzt. Ein Einmalpasswort ist nur für einen einzigen Vorgang gültig und kann danach nicht mehr genutzt werden. Dies verbessert die Sicherheit gegenüber unbefugtem Abhören, da ein Angreifer ein abgehörtes Passwort nicht für eine weitere Authentifizierung einsetzen kann. Damit beide Seiten wissen, welches Passwort gerade für einen Anmeldevorgang gültig ist, werden Passwortlisten (z.B. TAN-Listen im Onlinebanking) oder Passwortgeneratoren verwendet. Entsprechendes gilt auch für Einmalcodes.

Passwortgeneratoren berechnen beispielsweise zeit- oder ereignisgesteuert eine Reihe von Einmalpasswörter. Dazu werden ein auf beiden Seiten bekanntes Passwort und ein übermittelter Startwert (engl. Seed) verwendet. Aus diesen Werten wird mit einem geeigneten Algorithmus, z.B. mit Hilfe einer kryptografischen Hash-Funktion, bei jedem Ereignis ein Einmalpasswort generiert. Einem Angreifer ist es nicht möglich, aus einem abgehörten Einmalpasswort ein Folgendes zu berechnen. Kryptografische Hash-Funktionen werden zur Erzeugung eines HMAC (= keyed-Hash Message Authentication Code) zur Authentifizierung von Nachrichten benutzt. HMACs werden von vielen modernen Protokollen, wie beispielsweise IPsec (= IP Security) unterstützt.

Es sind Verfahren bekannt, bei denen eine Datenverarbeitungsanlage Passwörter oder sonstige Zugriffscodes an ein Mobilfunkendgerät übermittelt. Mittels Passwort kann ein Nutzer dann auf die Datenverarbeitungsanlage über ein Datennetz zugreifen oder angebotene Dienste in Anspruch nehmen.

Die Offenlegungsschrift DE 103 06 338 A1 offenbart ein Verfahren zum geschützten Zugang zu Datenbanken. Nachdem ein Benutzer über einen Personalcomputer und einen Kommunikationsweg einen Usernamen und ein Passwort an einen Server übermittelt hat, generiert der Server ein Einmalpasswort. Das Einmalpasswort wird als SMS an ein Mobilfunkendgerät des Benutzers geschickt. Der Benutzer erhält nun unter Verwendung des Einmalpassworts über den Personalcomputer und den Server einen Zugang zu einer Datenbank.

Nachteilig bei den bekannten Verfahren ist, dass sie für Anwendungen mit hohen Sicherheitsanforderungen nicht sicher genug sind. So kann z. B. ein Passwort versehentlich auch an ein falsches Gerät übermittelt werden kann, welches dann Zugriff auf die möglicherweise vertraulichen Daten hat. Oder es werden Passwörter von einem Server als gewöhnliche SMS verschickt und sind deshalb nicht hinreichend gegen unbefugtes Abhören geschützt. Insbesondere sind die Passwörter für einen Operator im Mobilfunknetz sichtbar. Oft sind bekannte Verfahren außerdem nicht sehr benutzerfreundlich oder nur sehr umständlich implementierbar.

*In dem Dokument* XP002427454 von Do van Thanh et al., "Offering SIM Strong Authentication to Internet Services", 1. Oktober 2006, URL: "http://www.strongsim.org /docs/MKT_SIM_StrongAuthWhitePaper.pdf*" wird eine Authentifizierung eines Benutzers eines im Internet angebotenen Dienstes mittels einer SIM-Karte (Subscriber Identity Module) des Benutzers beschrieben. Beispielsweise wird die in einem Mobilfunkendgerät des Benutzers vorgesehene SIM-Karte zur Authentifizierung verwendet. Dazu benutzt das beschriebene Verfahren ein durch die IETF (Internet Engineering Task Force) spezifiziertes EAP-SIM (Extensible Authentication Protocol). Unter anderem wird hierbei durch ein Endgerät des Benutzers mit einer SIM-Karte ein Nachrichten-Authentifizierungscode (MAC: Messaging Authentication Code) generiert und an einen Authentifizierungsserver übermittelt. In einer Variante des Verfahrens empfängt der Benutzer mit seinem Mobilfunkendgerät nach einer erfolgreichen Authentifizierung eine Session-ID als Passwort für einen Zugriff auf einen Internet-Dienst als SMS-Nachricht (Short Message Service). Diese Session-ID kann der Benutzer mit einem Endgerät für den Internet-Dienst verwenden. Auch in diesem Verfahren wird nachteilhaft eine gewöhnliche, nicht abhörsichere SMS für ein Passwort verwendet. Ferner wird das Verfahren zur Authentifizierung bei jedem Zugriff auf den Dienst im Internet verwendet. Somit muss stets ein Einbuchen in ein entsprechendes Mobilfunknetz möglich sein.*

### Offenbarung der Erfindung

Aufgabe der Erfindung ist es, ein einfaches Verfahren für den sicheren Austausch von Daten zwischen einer SIM-Karte und einer Datenverarbeitungsanlage zu schaffen.

Erfindungsgemäß wird die Aufgabe mittels des in Anspruch 1 definierten Verfahrens gelöst.

Die Erfindung beruht auf dem Prinzip, erst bei Bedarf mit einem auf einer SIM-Karte enthaltenen Aktivierungscodegenerator einen Aktivierungscode zu erzeugen und diesen für eine Verschlüsselung von Daten auf einer Datenverarbeitungsanlage zu verwenden. Der Aktivierungscode wird hierzu vorzugsweise über eine sichere PC-Verbindung an die Datenverarbeitungsanlage übermittelt. Der Benutzer hat sich zuvor über eine Sprachverbindung in der Datenverarbeitungsanlage registrieren lassen und einen Benutzername bzw. eine Benutzer-ID und ein Passwort erhalten. Mit Hilfe des Benutzernamens bzw. der Benutzer-ID und des Passworts authentifiziert sich der Benutzer zur Nutzung der sicheren PC-Verbindung. Die Verschlüsselung der Daten mit dem Aktivierungscode erfolgt z. B. mit einem 3DES- oder HMAC-Algorithmus. Die verschlüsselten Daten werden anschließend über einen OTA-Server (OTA= Over The Air Konfiguration) an die SIM-Karte gesendet. Ein OTA-Server dient zur Konfiguration einer SIM-Karte und verwendet dazu entsprechend hohe und für das erfindungsgemäß Verfahren vorteilhafte Sicherheitsvorkehrungen. In der SIM-Karte werden die verschlüsselten Daten mit Hilfe des Aktivierungscodes entschlüsselt.

Durch die Erzeugung des Aktivierungscodes mit der SIM-Karte erst zum Zeitpunkt der Verwendung muss der Aktivierungscode vorher nicht sicherheitsgefährdend gespeichert werden. Auch wird der Aktivierungscode direkt am Mobilfunkendgerät generiert und muss nicht von der Datenverarbeitungsanlage sicherheitskritisch übermittelt werden. Der Aktivierungscode wird auf der SIM-Karte abgelegt und befindet sich daher immer auf dem richtigen Mobilfunkendgerät. Des Weiteren wird mit dem Aktivierungscodegenerator ein sehr sicherer, beispielsweise beliebig langer Aktivierungscode erzeugt und die verschlüsselten Daten werden für das Mobilfunknetz nicht sichtbar von der Datenverarbeitungsanlage zum Mobilfunkendgerät übertragen. Mit diesen Umständen wird durch das erfindungsgemäße Verfahren eine hohe Sicherheit bei Austausch von Daten erzielt.

Weiterhin muss sich ein Benutzer den Aktivierungscode nicht merken oder irgendwo speichern. Auch muss er sich nicht selber ein sicheres Passwort ausdenken. Ein sicherer Aktivierungscode wird bei Bedarf automatisch erzeugt. Durch einen weitestgehend automatisierten Ablauf ist das erfindungsgemäße Verfahren sehr benutzerfreundlich.

Ferner werden durch die Nutzung einer SIM-Karte zur Generierung eines Aktivierungscodes entsprechende Ressourcen im Mobilfunknetz oder in der Datenverarbeitungsanlage geschont. Außerdem ist eine Erzeugung von Aktivierungscodes für verschiedene Datenverarbeitungsanlagen oder Applikations-Server unterschiedlicher Anbieter einfach möglich.

Eine vorteilhafte Ausgestaltung des erfindungsgemäßen Verfahrens zum sicheren Austauschen von Daten besteht darin, dass die verschlüsselten Daten ein gemeinsames Geheimnis zwischen Mobilfunkendgerät und Datenverarbeitungsanlage, insbesondere einen geteilten digitalen Schlüssel, eine Codierung, einen Pin oder ein Passwort, enthalten. Mit Hilfe des gemeinsamen Geheimnisses wird eine Authentifizierung des Mobilfunkteilnehmers möglich. Dazu kann beispielsweise eine Reihe von Einmalpasswörter zur Authentifizierung aus dem geteilten Schlüssel als gemeinsames Geheimnis generiert werden. Dem Mobilfunkteilnehmer wird anschließend ein Zugriff auf Daten oder eine Nutzung von Diensten über die Datenverarbeitungsanlage gestattet oder verweigert. Durch diese Ausgestaltung des erfindungsgemäßen Verfahrens wird einem Benutzer bei Bedarf ein schneller und unkomplizierter Zugriff auf Daten oder Dienste einer Datenverarbeitungsanlage ermöglicht. Dem Benutzer muss das gemeinsame Geheimnis nicht umständlich und zeitaufwendig persönlich übergeben oder per Post zugestellt werden. Durch die Verschlüsselung des gemeinsamen Geheimnisses ist dieses während der Übertragung im Mobilfunknetz nicht sichtbar. Das gemeinsame Geheimnis wird daher sehr sicher von der Datenverarbeitungsanlage zum Mobilfunkendgerät übermittelt.

Bei einer weiteren vorteilhaften Ausbildung des erfindungsgemäßen Verfahrens zum sicheren Austauschen von Daten ist der Aktivierungscode zur einmaligen Benutzung vorgesehen. Nach einer Benutzung ist der Aktivierungscode verbraucht und ungültig. Damit wird ein unbefugtes Abhören des Aktivierungscodes sinnlos, da der Aktivierungscode unmittelbar nach einer Verwendung und damit auch direkt nach einem Abhören nicht mehr benutzt werden kann. Mit der Verwendung von einmal benutzbaren Aktivierungscodes wird die Sicherheit des erfindungsgemäßen Verfahrens wesentlich erhöht.

In einer bevorzugten Ausbildung der Erfindung wird der Aktivierungscode über einen Sprachkanal des Mobilfunknetzes gesendet. Der Aktivierungscode wird entweder einem Administrator oder einer interaktiven, sprachgesteuerten Einrichtung (IVR= Interactive Voice Response) von dem Benutzer vorgelesen oder an eine DTMF-Einrichtung (DTMF= Dual Tone Multiple Frequency) durch Tastatureingabe übermittelt. Der Sprachkanal ist dabei völlig unabhängig von einem Datenübertragungskanal zur Übermittlung von codierten Daten geschaltet und es werden dem Standard entsprechende Verschlüsselungsmechanismen für Sprachübertragungen genutzt. Dadurch wird die Sicherheit des erfindungsgemäßen Verfahrens optimiert. Weiterhin sind vor, während oder nach einer Übertragung des Aktivierungscodes weitere Optionen oder Präferenzen des Benutzers durch den Administrator oder die IVR- oder DTMF-Einrichtung abfragbar. Dies verbessert die Benutzerfreundlichkeit des erfindungsgemäßen Verfahrens.

Gemäß einer nützlichen Ausgestaltung des erfindungsgemäßen Verfahrens zum sicheren Austauschen von Daten bestätigt die Datenverarbeitungsanlage den Eingang des Aktivierungscodes, insbesondere als SMS und/oder MMS. Mit einer Bestätigung in Form einer Kurznachricht erfährt ein Benutzer, wie weit das erfindungsgemäße Verfahren fortgeschritten ist. Damit wird die Benutzerfreundlichkeit des Verfahrens verbessert. Außerdem können mit der Bestätigung auch weitere Informationen, wie beispielsweise User-Namen oder statische Passworte an den Benutzer übermittelt werden. Die Effizienz und Sicherheit des erfindungsgemäßen Verfahrens wird gesteigert.

Als vorteilhafte Ausbildung der Erfindung hat sich weiterhin erwiesen, wenn die zu decodierenden Daten als SMS und/oder MMS an eine SIM-Karte übermittelt werden. Eine Kurznachricht mit den codierten Daten wird über einen SMS-Dienst an die SIM-Karte eines Mobilfunkendgerät gesendet. Es ist auch eine Verwendung von alternativen Verfahren oder Formaten zur Übermittlung der codierten Daten, wie beispielsweise USSD (= Unstructured Supplementary Service Data) oder E-Mail möglich. Durch Verwendung eines eigenen Übermittlungskanals für die zu decodierenden Daten wird die Sicherheit des Verfahrens erhöht. Ferner wird eine Decodierung und Weiterverarbeitung der empfangenen Daten direkt und unkompliziert durch ein Mobilfunkendgerät oder die SIM-Karte ermöglicht.

Eine bevorzugte Ausgestaltung des erfindungsgemäßen Verfahrens zum sicheren Austauschen von Daten wird dadurch erreicht, dass der Zugriff und/oder der Austausch der Daten über ein Netzwerk, insbesondere das Internet erfolgen. Durch eine Nutzung vorhandener Netzwerke wird ein Zugriff und/oder Austausch von Daten schnell und kostengünstig möglich. Bei Netzen wie dem Internet ist ein weltweiter Zugriff auf Daten oder Dienstleistungen einfach und preiswert mit vorhandenen Ressourcen durchführbar. Weiterhin ist eine Anbindung neuer Datenverarbeitungsanlagen oder Dienst-Server unproblematisch und umgehend realisierbar. Diese Vorteile gelten nun auch für das erfindungsgemäße Verfahren.

Eine weitere effektive Ausbildung des erfindungsgemäßen Verfahrens zum sicheren Austauschen von Daten wird durch einen zeitlich begrenzt gültigen Aktivierungscode erzielt. Eine begrenzte Gültigkeitsdauer des Aktivierungscodes wird dabei zusammen oder alternativ zur einmaligen Benutzbarkeit des Aktivierungscodes verwendet. Durch zeitlich begrenzt gültige Aktivierungscodes wird ein Missbrauch durch Abhören erschwert. Auch werden Sicherheitsrisikos bei einer, z.B. durch den Benutzer oder eine Störung verursachten, verzögerten Übermittlung des Aktivierungscodes vermieden. Weiterhin wird ein Zugriff und/oder Austausch von Daten mit einem Mobilfunkendgerät nur über einen beschränkten Zeitraum möglich. Ein zeitlich beschränkter Zugriff auf Daten oder eine zeitlich beschränkte Erzeugung von gemeinsamen Geheimnissen wird einfach verwirklicht.

Weitere Ausgestaltungen und Vorteile ergeben sich aus dem Gegenstand der Unteransprüche, sowie der Zeichnung mit der dazugehörigen Beschreibung.

### Kurze Beschreibung der Zeichnung

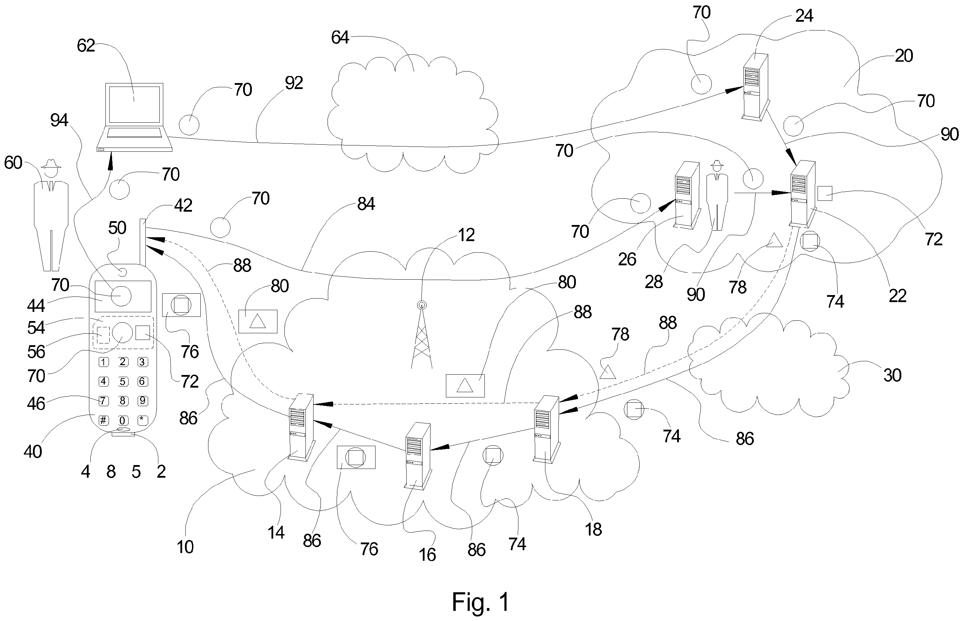

- Fig. 1: zeigt in einer schematischen Prinzipskizze ein Ausführungsbeispiel des Verfahrens zum sicheren Austauschen von Daten, welche in einer Datenverarbeitungsanlage gespeichert sind.

### Bevorzugtes Ausführungsbeispiel

In Fig. 1 wird mit 10 ein Mobilfunknetz bezeichnet. Das Mobilfunknetz 10 enthält alle Bestandteile, die für ein Mobilfunknetz, beispielsweise nach dem GSM- oder UMTS-Standard, erforderlich sind. Mobilfunknetze nach dem GSM- und UMTS-Standard sind dem Fachmann geläufig und werden der Einfachheit halber nur durch eine Wolke mit einem darin enthaltenen Sendemast 12 stilisiert dargestellt. Insbesondere verfügt das Mobilfunknetz 10 über ein Short Message Service Center (= SMSC) 14 zur Vermittlung von Kurznachrichten und einen Over The Air Konfigurations-Server (OTA-Server) 16 zur Konfiguration von SIM-Karten über das Mobilfunknetz 10.

Weiterhin ist in dem Mobilfunknetz 10 ein Mobilfunk-Benutzer-AuthentifizierungsServer (MUA-Server= Mobile Network User Authentication Server) 18 vorgesehen. Der MUA-Server 18 dient als Schnittstelle zwischen einem Benutzer-AuthentifizierungsServer 22 einer Firma (CUA-Server = Company User Authentication Server) und dem Mobilfunknetz 10. Der MUA-Server 18 kann auch Validierungsaufgaben übernehmen.

Der CUA-Server 22 ist als Datenverarbeitungsanlage an ein Firmenrechnernetz 20 angebunden, welches beispielsweise als Intranet ausgebildet ist. Das Firmenrechnernetz 20 dient zur Kommunikation und Datenverarbeitung in einer Firma. Der Aufbau und die Funktionalität eines solchen Netzes sind dem Fachmann bekannt. Das Firmenrechnernetz 20 wird deshalb ebenfalls nur durch eine Wolke stilisiert dargestellt. In dem Firmenrechnernetz 20 übernimmt der CUA-Server 22 eine Authentifizierung und Autorisierung von Benutzern. Unter anderem validiert der CUA-Server 22 Passwörter und Aktivierungscodes. Außerdem erzeugt der CUA-Server 22 Geheimnisse und verschlüsselt oder entschlüsselt Daten, wie beispielsweise die Geheimnisse.

Über ein Datenübertragungsnetz 30 kann der CUA-Server 22 mit dem MUA-Server 18 des Mobilfunknetzes 10 Daten austauschen. Das Datenübertragungsnetz 30 ist beispielsweise das Internet, ein Telefonnetz oder ein Mobilfunknetz und enthält alle zur Datenübertragung notwendigen Vorrichtungen. Zur Vereinfachung wird das Datenübertragungsnetz 30 als Wolke stilisiert dargestellt.

Des Weiteren enthält das Firmenrechnernetz 20 einen Applikations-Server 24 zur Bereitstellung von Diensten und Daten für Benutzer. Insbesondere kann der Applikations-Server 24 ein Selbstbedienungsportal zu Aktivierung von Diensten oder Datenzugriffen in das Internet stellen. Auch eine IVR-Einheit 26 (= Interactive Voice Response Einheit) ist im Firmenrechnernetz 20 vorgesehen. Die IVR-Einheit 26 eignet sich insbesondere für größere Firmennetze und ermöglicht eine interaktive, sprachgesteuerte Übermittlung von benutzerbezogenen Daten mittels eines Sprachrufs von einem Benutzer. Alternativ kann dazu auch ein Administrator 28 oder eine in Fig. 1 nicht dargestellte DTMF-Einheit (= Dual Tone Multiple Frequency Einheit) vorgesehen sein. In einer anderen Ausführung des Verfahrens zur Zugriffs- und/oder Austauschberechtigung für Daten wird die IVR-Einheit 26 oder der Administrator 28 dem Mobilfunknetz 10 zugeordnet. Über eine Schnittstelle, z. B. über den MUA-Server 18, sind diese dann mit dem CUA-Server 22 des Firmenrechnernetzes 20 verbunden.

Mit einem Mobilfunkendgerät 40 kann ein Benutzer 60 über das Mobilfunknetz 10 mobil kommunizieren und angebotene Dienste in Anspruch nehmen. Dazu verfügt das Mobilfunkendgerät 40 über ein entsprechendes Mobilfunkmodul 42 zum Senden und Empfangen von Daten über das Mobilfunknetz 10. Ferner weist das Mobilfunkendgerät 40 eine Anzeige 44 auf. Mit der Anzeige 44 werden u. a. Nummern, Adressen, Bedienermenüs oder Kurznachrichten für den Benutzer 60 dargestellt. Eine Steuerung des Mobilfunkendgeräts 40 erfolgt durch den Benutzer 60 über eine Bedienungseinheit 46. Eine verbale Kommunikation wird dem Benutzer 60 durch ein Mikrofon 48 und ein Lautsprecher 50 ermöglicht, welche beispielsweise in dem Mobilfunkendgerät 40 enthalten sind oder mittels einer Schnittstelle 52 mit dem Mobilfunkendgerät 40 verbunden werden. Das Mobilfunkendgerät 40 kann beispielsweise ein digitales, zellulares Mobiltelefon (z. B. nach dem GSM-, HSCSD-, GPRS-, EDGE-, CDMA- oder WLAN-Standard), ein UMTS-Mobiltelefon, ein stationärer Rechner oder ein tragbarer Rechner (z. B. PDA, Laptop) mit einer kontaktlosen Schnittstelle (z. B. mit einer GSM-, HSCSD-, GPRS-, EDGE-, CDMA-, UMTS- oder WLAN-Erweiterungskarte) sein.

Zur Identifizierung und Authentifizierung des Benutzers 60 im Mobilfunknetz 10 ist in dem Mobilfunkendgerät 40 eine SIM-Karte 54 vorgesehen. Dabei kann durch Eingabe einer PIN (= Persönliche Identifikationsnummer) mit der Bedienungseinheit 46 eine Authentifizierung des Benutzer 60 gegenüber der SIM-Karte 54 vorgesehen sein. Weiterhin enthält die SIM-Karte 54 einen Aktivierungscodegenerator 56 zur Erzeugung von Aktivierungscodes. Der Aktivierungscodegenerator 56 erzeugt in dieser Ausführung einmal gültige Aktivierungscodes. Dazu kann beispielsweise eine Hash- oder HMAC-Funktion eingesetzt werden. Alternativ oder zusätzlich können die Aktivierungscodes auch eine zeitlich beschränkte Gültigkeit aufweisen. Ferner sind auch Aktivierungscodes für eine mehrfache Anwendung möglich.

Der Aktivierungscodegenerator 56 wird vor oder während einer Ausgabe der SIM-Karte an den Benutzer 60 durch einen Mobilfunknetzbetreiber oder eine Firma mit weiteren notwendigen Komponenten, wie beispielsweise Passwörter, Codes und Verschlüsselungsalgorithmen auf der SIM-Karte 54 installiert. Alternativ kann eine Installation des Aktivierungscodegenerators 56 auch in einer Registrierungsphase des Benutzers 10, beispielsweise über den OTA-Server 16 durchgeführt werden. Zur Registrierung wird der Benutzer 10 durch persönliches Erscheinen oder über einen Sprachruf mit entsprechenden Sicherheitsvorkehrungen unter Verwendung des CUA-Servers 22 hinreichend identifiziert und authentifiziert. Eine Registrierung ist alternativ auch über ein Datenübertragungsnetz, z. B. einem virtuellen privaten Netz mit ausreichender Sicherheit möglich. Der CUA-Server 22 teilt dem MÚA-Server 18 eine erfolgreiche Registrierung mit, daraufhin veranlasst der MUA-Server 18 den OTA-Server 16 zur Installation des Aktivierungscodegenerators 56 und weiterer Komponenten auf der SIM-Karte 54. Nach einer erfolgreichen Registrierung erhält der Benutzer einen Benutzername bzw. eine Benutzer-ID und ein statisches Passwort.

Ferner wird in Fig. 1 mit 62 ein Endgerät bezeichnet. Das Endgerät 62 ist beispielsweise ein stationärer oder mobiler Rechner oder ein Mobilfunkendgerät und kann über ein Datenübertragungsnetz 64 Daten mit dem Applikations-Server 24 des Firmenrechnernetzes 20 austauschen. Das Datenübertragungsnetz 64 ist z. B. ein Intranet, ein Telefonnetz, ein Mobilfunknetz, das Internet oder ein virtuelles privates Netz und verfügt über alle zur Datenübertragung notwendigen Vorrichtungen. Der Einfachheit halber wird das Datenübertragungsnetz 64 ebenfalls als Wolke stilisiert dargestellt.

Im Folgenden wird ein sicherer Austausch von Daten mit einen einmal gültigen Aktivierungscode beschrieben. Die Daten enthalten ein Geheimnis, beispielsweise einen symmetrischen digitalen Schlüssel. Mit dem so erzeugten gemeinsamen Geheimnis zwischen dem Mobilfunkendgerät 40 und dem CUA-Server 22 wird ein Zugriff auf Daten oder ein Zugang zu einem Dienst des Firmenrechnernetzes 20 aktiviert. Das gemeinsame Geheimnis ermöglicht eine sichere Authentifizierung des Benutzers 60 bei einem Zugriff auf Daten oder einer Inanspruchnahme eines Dienstes durch das Firmenrechnernetz 20. Zum Beispiel kann mit einem digitalen Schlüssel eine Reihe von Einmalpassworten durch einen Passwortgenerator erzeugt werden. Mit der Trennung von Registrierung und Aktivierung wird das Verfahren noch sicherer und vielseitiger anwendbar.

Zur Aktivierung eines angebotenen Dienstes oder Datenzugriffs des Firmenrechnernetzes 20 wählt der Benutzer 60 den entsprechenden Dienst oder Datenzugriff aus einer auf der Anzeige 44 dargestellten Liste aus. Dazu verwendet der Benutzer die Bedienungseinheit 46. Der Aktivierungscodegenerator 56 erzeugt daraufhin einen einmal gültigen Aktivierungscode 70, welcher auf der Anzeige 44 zusammen mit einer Adresse eines Selbstbedienungsportals des Firmenrechnernetzes 20 (z.B. eine Webseite im Internet) dargestellt wird. Der Aktivierungscode 70 wird in Fig. 1 mit einem Kreis symbolisiert. Anschließend ruft der Benutzer 60 das Selbstbedienungsportal durch Eingabe der Adresse in das Endgerät 62 über das Datenübertragungsnetz 64 auf. Gegenüber dem Selbstbedienungsportal authentifiziert sich der Benutzer 60 durch Angabe der bei der Registrierung erhaltenen Benutzer-ID und dem statischen Passwort. Daraufhin fordert das Selbstbedienungsportal den Benutzer 60 zur Eingabe (Pfeil 94) des auf der Anzeige 44 des Mobilfunkendgeräts 40 angezeigten Aktivierungscodes 70 auf. Auch eine Anforderung von weiteren Benutzerdaten durch das Selbstbedienungsportal ist möglich. Der Aktivierungscode 70 wird über eine sichere PC-Verbindung 92 in dem Datenübertragungsnetz 64 an den Applikations-Server 24 übertragen. Der Applikations-Server 24 verwaltet das Selbstbedienungsportal und leitet den einmal gültigen Aktivierungscode über einen Datenkanal 90 im Firmenrechnernetz 20 an den CUA-Server 22 weiter.

In einer anderen Variante des Verfahrens wird statt der sicheren PC-Verbindung 92 ein Sprachkanal 84 verwendet. Der Aktivierungscode 70 wird zusammen mit einer Rufnummer oder -adresse auf der Anzeige 44 dem Benutzer 60 dargestellt. Durch Eingabe der Rufnummer oder -adresse in das Mobilfunkendgerät 40 über die Bedienungseinheit 46 wird über das Mobilfunkmodul 42 und das Mobilfunknetz 10 ein Sprachkanal 84 zu der IVR-Einheit 26 oder zu dem Administrator 28 hergestellt. Alternativ ist eine automatische Anwahl der dargestellten Rufnummer oder -adresse möglich. Die IVR-Einheit 26 oder der Administrator 28 fragen den einmal gültigen Aktivierungscode 70 ab und leiten den Aktivierungscode 70 an den CUA-Server 22 des Firmenrechnernetzes 20 weiter.

Der CUA-Server 22 überprüft die Gültigkeit des Aktivierungscodes 70 und die Identität und Zugriffsberechtigung des Benutzers 60. In einer alternativen Ausführung des Verfahrens wird eine geteilte Validierung des Aktivierungscodes eingesetzt. Die Validierung wird von Mobilfunknetz 10 und dem Firmenrechnernetz 20 durchgeführt. Dabei erfolgt zusätzlich eine Authentifizierung des Mobilfunknetzes 10 durch das Firmenrechnernetz 20 und umgekehrt eine Authentifizierung des Firmenrechnernetzes 20 durch das Mobilfunknetz 10. Das Mobilfunknetz 10 und das Firmenrechnernetz 20 müssen sich nicht vertrauen. Die Sicherheit des Verfahrens wird dadurch weiter erhöht.

Bei einer positiven Validierung erzeugt der CUA-Server 22 ein Geheimnis 72 (z. B. einen digitalen Schlüssel, ein Passwort, ein Code oder ein Startwert für einen Passwortgenerator), welches in Fig. 1 als Quadrat symbolisiert wird. Anschließend verschlüsselt der CUA-Server 22 das Geheimnis 72 mit dem Aktivierungscode 70. Hierzu kann beispielsweise ein 3DES-Algorithmus verwendet werden. Das verschlüsselte Geheimnis 74 wird als Quadrat im Kreis symbolisiert. Über den Datenkanal 86 im Datenübertragungsnetz 30 wird das verschlüsselte Geheimnis 74 an den MUA-Server 18 im Mobilfunknetz 10 gesendet. Der MUA-Server 18 leitet das verschlüsselte Geheimnis 74 mit dem Auftrag einer OTA-Konfiguration an den OTA-Server 16 weiter. Der OTA-Server 16 sendet daraufhin im Rahmen einer OTA-Konfiguration das verschlüsselte Geheimnis 74 als Kurznachricht 76 über das SMSC 14 oder direkt an die SIM-Karte 54 des Mobilfunkendgeräts 40. Dabei werden vorteilhaft die Sicherheitsmechanismen für eine OTA-Konfiguration genutzt.

Eine erfolgreiche Übermittlung der Kurznachricht 76 bzw. Konfiguration der SIM-Karte 54 wird dem OTA-Server 16 mitgeteilt. Über den MUA-Server 18 wird diese Information an den CUA-Server 22 weitergereicht. Der CUA-Server 22 aktiviert daraufhin den entsprechenden Dienst oder Datenzugriff, beispielsweise auf dem Applikations-Server 24 für den Benutzer. Anschließend schickt der CUA-Server 22 eine Bestätigung 78 der Aktivierung über den Datenkanal 88 im Datenübertragungsnetz 30 und den MUA-Server 18 als Bestätigungskurznachricht 80 an das Mobilfunkendgerät 40. Die Bestätigung wird in Fig. 1 als Dreieck symbolisiert. Dem Benutzer 60 wird die erfolgreiche Aktivierung durch Anzeigen der Kurznachricht 80 auf der Anzeige 44 mitgeteilt. In der SIM-Karte 54 wird das verschlüsselte Geheimnis 74 unter Verwendung des Aktivierungscodes 70 entschlüsselt. Mit dem so erzeugten gemeinsamen Geheimnis kann der Benutzer 60 den aktivierten Dienst oder Datenzugriff in Anspruch nehmen.

Während der gesamten Übertragung von dem CUA-Server 22 zur SIM-Karte 54 ist das Geheimnis 72 verschlüsselt. Insbesondere ist das Geheimnis 72 nicht im Mobilfunknetz 10 sichtbar. Durch entsprechende Verschlüsselungsverfahren wird erreicht, dass auch bei einem abgehörten und damit bekanntem Aktivierungscode 70 das verschlüsselte Geheimnis 74 nicht entschlüsselt werden kann. Die Verwendung von unterschiedlichen Datenkanälen 84, 86, 92 bei der Übermittlung des Aktivierungscodes 70 und des verschlüsselten Geheimnisses 74 trägt zur Sicherheit des Verfahrens bei.

Bei einer weiteren, in Fig. 1 nicht aufgezeigten Variante wird das Geheimnis auf der SIM-Karte 54 erzeugt, mit dem Aktivierungscode 70 verschlüsselt und über den OTA-Server 16 an den CUA-Server 22 übermittelt.

Das Verfahren eignet sich besonders zur Etablierung eines geteilten digitalen Schlüssels, welcher eine Erzeugung von Einmalpasswörter zur Authentifizierung eines Benutzers ermöglicht.

Mit dem Verfahren wird einem Benutzer 60 eine bedarfsorientierte und benutzerfreundliche Aktivierung von Diensten oder Datenzugriffen ermöglicht und dabei eine hohe Sicherheit für alle beteiligten Parteien gewährleistet. Durch den Aktivierungscodegenerator 56 kann das Verfahren unproblematisch mehrmals zum Erzeugen verschiedener gemeinsamer Geheimnisse bzw. zum Aktivieren unterschiedlicher Dienste oder Datenzugriffe ausgeführt werden. Das Verfahren ist vielseitig einsetzbar und eignet sich besonders für Online-Dienste und für aufkommende Dienste auf Anforderung.

**Bezugszeichenliste**

| | | | |
|---|---|---|---|
| 10 | Mobilfunknetz | 54 | SIM-Karte |
| 12 | Sendemast | 56 | Aktivierungscodegenerator |
| 14 | SMSC | 60 | Benutzer |
| 16 | OTA-Server | 62 | Endgerät |
| 18 | MUA-Server | 64 | Datenübertragungsnetz |
| 20 | Firmenrechnernetz | 70 | Aktivierungscode |
| 22 | CUA-Server | 72 | Geheimnis (Daten) |
| 24 | Applikations-Server | 74 | verschlüsseltes Geheimnis |
| 26 | IVR-Einheit | 76 | Kurznachricht mit 74 |
| 28 | Administrator | 78 | Bestätigung |
| 30 | Datenübertragungsnetz | 80 | Bestätigungskurznachricht |
| 40 | Mobilfunkendgerät | 84 | Sprachkanal |
| 42 | Mobilfunkmodul | 86 | Datenkanal gemeinsames Geheimnis |
| 44 | Anzeige | 88 | Datenkanal Bestätigung |
| 46 | Bedienungseinheit | 90 | Datenkanal Firmenrechnernetz |
| 48 | Mikrofon | 92 | sichere PC-Verbindung |
| 50 | Lautsprecher | 94 | Pfeil |
| 52 | Schnittstelle | | |

## Patentansprüche

1. Verfahren zum sicheren Austausch von Daten (72), welche in einer Datenverarbeitungsanlage handelnd als Benutzer-Authentifizierungsserver (22) eines Firmenrechnernetzes (20) [S. 9, Z. 5] gespeichert sind, wobei der sichere Austausch der Daten (72) mit einem Mobilfunkendgerät (40) erfolgt, welches sich mit Hilfe einer SIM-Karte (54) in einem Mobilfunknetz (10) identifiziert und authentifiziert, mit folgenden Verfahrensschritten:
- Registrieren eines Benutzers durch eine Sprachverbindung in der Datenverarbeitungsanlage (22),
- Übermitteln eines statischen [S. 11, Z.10] Passwortes und eines Benutzernamens an den Benutzer,
- Aufruf eines Selbstbedienungsportals des Firmenrechnernetzes (20) und Authentifizierung gegenüber dem Selbstbedienungsportal unter Nutzung des statischen Passwortes und des Benutzernamens, [S.12, Z.6-12]
- Generieren eines Aktivierungscodes (70) durch einen auf der SIM-Karte (54) des Mobilfunkendgeräts (10) vorgesehenen Aktivierungscodegenerator (56),
- Übermitteln des so generierten Aktivierungscodes (70) an die Datenverarbeitungsanlage (22) über eine sichere PC-Verbindung (92) oder einen Sprachkanal (84) des Mobilfunknetzes,
- Validierung einer Gültigkeit des Aktivierungscodes (70) sowie des Benutzernamens und einer Zugriffsberechtigung des Benutzers (60) durch die Datenverarbeitungsanlage (22), [S. 13, Z. 1-2]
- Verschlüsseln der Daten (72) unter Verwendung des Aktivierungscodes (70) in der Datenverarbeitungsanlage (22),
- Versenden der so verschlüsselten Daten (74) über einen Over The Air-Server (16) des Mobilfunknetzes (10) an die SIM-Karte (54).
- Decodieren der so verschlüsselten Daten (74) durch die SIM-Karte (54) unter Verwendung des Aktivierungscodes (70).

2. Verfahren zum sicheren Austauschen von Daten (72), welche in einer Datenverarbeitungsanlage (22) gespeichert sind nach Anspruch 1, wobei die verschlüsselten Daten (74) ein gemeinsames Geheimnis (74) zwischen Mobilfunkendgerät (40) und Datenverarbeitungsanlage (22) enthalten.

3. Verfahren zum sicheren Austauschen von Daten (72), welche in einer Datenverarbeitungsanlage (22) gespeichert sind nach einem der Ansprüche 1 oder 2, wobei der Aktivierungscode (70) zur einmaligen Benutzung vorgesehen ist.

4. Verfahren zum sicheren Austauschen von Daten (72), welche in einer Datenverarbeitungsanlage (22) gespeichert sind nach einem der Ansprüche 1 bis 3, wobei der Aktivierungscode (70) über einen Sprachkanal (84) des Mobilfunknetzes (10) gesendet wird.

5. Verfahren zum sicheren Austausch von Daten (72), welche in einer Datenverarbeitungsanlage (22) gespeichert sind nach einem der Ansprüche 1 bis 4, wobei die Datenverarbeitungsanlage (22) den Eingang des Aktivierungscodes (70) bestätigt.

6. Verfahren zum sicheren Austauschen von Daten (72), welche in einer Datenverarbeitungsanlage (22) gespeichert sind nach einem der Ansprüche 1 bis 5, wobei die zu decodierenden Daten (74) als SMS (76) und/oder MMS an die SIM-Karte (54) übermittelt werden.

7. Verfahren zum sicheren Austauschen von Daten (72), welche in einer Datenverarbeitungsanlage (22) gespeichert sind nach einem der Ansprüche 1 bis 6, wobei der Zugriff und/oder der Austausch der Daten (72) über ein Netzwerk (30) erfolgt.

8. Verfahren zum sicheren Austauschen von Daten (72), welche in einer Datenverarbeitungsanlage (22) gespeichert sind nach einem der Ansprüche 1 bis 7, wobei der Aktivierungscode (70) zeitlich begrenzt gültig ist.

## Claims

1. A method for the secure exchange of data (72) which are stored in a data processing system acting as user authentication server (22) of a company computer network (20), wherein the secure exchange of the data (72) is realized by means of a mobile radio terminal (40) which identifies and authenticates itself in a mobile radio network (10) by means of a SIM card (54), comprising the following process steps:
- registering a user in the data processing system (22) by means of an audio connection,
- transmitting a static pass word and a user name to the user,
- calling a self-service portal of the company computer network (20) and authentication vis-à-vis the self-service portal using the static pass word and the user name
- generating an activation code (70) by means of an activation code generator (56) provided on the SIM card (54) of the mobile radio terminal (10),
- transmitting the thus generated activation code (70) to the data processing system (22) via a secure PC connection (92) or a voice channel (84) of the mobile radio network,
- validating a validity of the activation code (70) as well as of the user name and of an access authorisation of the user (60) by means of the data processing system (22),
- encrypting the data (72) using the activation code (70) in the data processing system (22),
- sending the thus encrypted data (74) via an over the air server (16) of the mobile radio network (10) to the SIM card (54),
- decoding the thus encrypted data (74) by means of the SIM card (54) using the activation code (70).

2. A method for the secure exchange of data (72) which are stored in a data processing system (22) according to claim 1, wherein the encrypted data (74) contain a common secret (74) of the mobile radio terminal (40) and the data processing system (22).

3. A method for the secure exchange of data (72) which are stored in a data processing system (22) according to one of the claims 1 or 2, wherein the activation code (70) is provided for a single use.

4. A method for the secure exchange of data (72) which are stored in a data processing system (22) according to one of the claims 1 to 3, wherein the activation code (70) will be sent via a voice channel (84) of the mobile radio network (10).

5. A method for the secure exchange of data (72) which are stored in a data processing system (22) according to one of the claims 1 to 4, wherein the data processing system (22) will acknowledge the receipt of the activation code (70).

6. A method for the secure exchange of data (72) which are stored in a data processing system (22) according to one of the claims 1 to 5, wherein the data (74) to be decoded will be transmitted as SMS (76) and/or MMS to the SIM card (54).

7. A method for the secure exchange of data (72) which are stored in a data processing system (22) according to one of the claims 1 to 6, wherein the access and/or the exchange of the data (72) will take place via a network (30).

8. A method for the secure exchange of data (72) which are stored in a data processing system (22) according to one of the claims 1 to 7, wherein the activation code (70) is valid for a limited period of time.

## Revendications

1. Procédé d'échange sécurisé des données (72) qui sont mémorisées dans un dispositif de traitement de données, qui agit comme un serveur d'authentification d'utilisateur (22), d'un réseau d'ordinateurs d'entreprise (20), dans lequel l'échange sécurisé des données (72) a lieu par moyen d'un terminal radio mobile (40), qui s'identifie et s'authentifie auprès d'un réseau radio mobile (10) à l'aide d'une carte SIM (54), comprenant les étapes de procédé suivantes de:
- enregistrer un utilisateur dans le dispositif de traitement de données (22) par moyen d'une communication vocale,
- transmettre un mot de passe statique et un nom d'utilisateur à l'utilisateur,
- appeler un portail libre-service du réseau d'ordinateurs d'entreprise (20) et s'authentifier auprès du portail libre-service en utilisant le mot de passe statique et le nom d'utilisateur,
- générer un code d'activation (70) à l'aide d'un générateur de code d'activation (56) prévu sur la carte SIM (54) du terminal radio mobile (10),
- transmettre le code d'activation (70) généré ainsi au dispositif de traitement de données (22) via une connexion de PC sécurisée (92) ou via un canal vocal (84) du réseau radio mobile,
- valider une validité du code d'activation (70) ainsi que du nom d'utilisateur et d'une autorisation d'accès de l'utilisateur (60) par moyen d'un dispositif de traitement de données (22),
- crypter les données (72) en utilisant le code d'activation (70) dans le dispositif de traitement de données (22),
- envoyer les données cryptées ainsi (74) via un serveur Over The Air (16) du réseau radio mobile (10) à la carte SIM (54),
- décoder les données cryptées ainsi (74) par moyen de la carte SIM (54) en utilisant le code d'activation (70).

2. Procédé d'échange sécurisé des données (72) qui sont mémorisées dans un dispositif de traitement de données (22) selon la revendication 1, dans lequel les données cryptées (74) contiennent un secret commun (74) du terminal radio mobile (40) et du dispositif de traitement de données (22).

3. Procédé d'échange sécurisé des données (72) qui sont mémorisées dans un dispositif de traitement de données (22) selon l'une des revendications 1 ou 2, dans lequel le code d'activation (70) est prévu pour être utilisé une seule fois.

4. Procédé d'échange sécurisé des données (72) qui sont mémorisées dans un dispositif de traitement de données (22) selon l'une des revendications 1 à 3, dans lequel le code d'activation est envoyé via un canal vocal (84) du réseau radio mobile (10).

5. Procédé d'échange sécurisé des données (72) qui sont mémorisées dans un dispositif de traitement de données (22) selon l'une des revendications 1 à 4, dans lequel le dispositif de traitement de données (22) accuse réception du code d'activation (70).

6. Procédé d'échange sécurisé des données (72) qui sont mémorisées dans un dispositif de traitement de données (22) selon l'une des revendications 1 à 5, dans lequel les données à décoder (74) sont transmises en forme de SMS (76) et/ou en forme de MMS à la carte SIM (54).

7. Procédé d'échange sécurisé des données (72) qui sont mémorisées dans un dispositif de traitement de données (22) selon l'une des revendications 1 à 6, dans lequel l'accès et/ou l'échange des données (72) se fait par un réseau (30).

8. Procédé d'échange sécurisé des données (72) qui sont mémorisées dans un dispositif de traitement de données (22) selon l'une des revendications 1 à 7, dans lequel le code d'activation (70) a une validité qui est limitée dans le temps.
